# EUROPEAN PATENT APPLICATION

(11) **EP 1 541 630 A1**
(43) Date of publication of application: **15.06.2005**
(21) Application number: 04105125.1
(22) Date of filing: 18.10.2004
(51) Int. Cl.: C08L 9/04, C08L 19/02, C08K 5/17, A61L 31/04

(54) **Crosslinking Polymer Composition**

(30) Priority: 21.11.2003 US 718840
(71) Applicant: Shinemound Enterprise, Inc., N. Billerica, Massachusetts 01862 (US)
(72) Inventor: Perrella, Frank W, 03031, Amherst (US)
(74) Representative: Loven, Keith James

(57) **Abstract**

A polymer composition containing components A and B provides a crosslinked network to form an elastomeric film. Component A comprises A1 a high molecular weight polymer containing units having carboxyl and/or hyroxyl groups, and A2 a relatively low molecular weight coreactant polyelectrolyte containing units having carboxyl and/or hydroxyl groups. Component B comprises a polyfunctional crosslinking agent capable of crosslinking with carboxyl and/or hydroxyl groups at ambient temperatures or higher. Crosslinker B may polymerize into higher molecular weight polymers, form covalent cross links between polymer A1 and polyelectrolyte A2, and/or entrap or entangle polymers A1, A2, and B. The crosslinking reaction may be enhanced by using an acid or acid-forming catalyst.

## Description

### FIELD OF THE INVENTION

The invention relates to rubber latex compositions, and more particularly, to a crosslinking polymer composition especially suitable for use in making accelerator-free rubber products.

### BACKGROUND OF THE INVENTION

Conventional thin film rubber products, such as rubber gloves and condoms, are made predominantly from rubber vulcanized with sulfur and chemical accelerators at high temperatures (greater than 212 °F (100 °C)). In the vulcanization process, sulfur and chemical accelerators, such as dithiocarbamates, thiruams, benzothiazoles, guanidines, and sulfenamides are used to introduce cross links (vulcanize) in the rubber polymer to impart elasticity. A major disadvantage of sulfur vulcanized rubber products is that the chemical accelerators commonly used in making these products are known to cause allergic contact dermatitis or Type IV skin allergy. Thus, there is a demand for accelerator-free crosslinked rubber products.

Many latex polymers currently available for making rubber products, particularly for use in rubber gloves, contain acrylonitrile butadiene (nitrile rubber). Nitrile polymers may contain functional groups, such as carboxylic acid esters, that may be used for crosslinking. In one known technique, a rubber nitrile material is crosslinked non-covalently through polyvalent metal ions. However, nitrile polymers that are crosslinked non-covalently are typically not as strong as those polymers crosslinked by covalent linkages.

Other known rubber materials use a polyisocyanate chemical crosslinker to react with functional groups in the polymer covalently. However, these agents are highly toxic and environmentally unsafe chemicals.

Another technique seeks to alleviate the aforementioned problems by using crosslinkers selected from the group of multifunctional carbodiimides, aziridines, epoxies, hydroxyethylamides or amine complexes of zinc or zirconium, which may be used as crosslinking agents. Here, crosslinking of carboxylated nitrile is achieved through its carboxyl functional groups. However, this crosslinking is less effective because there is a limited number of carboxyl functional groups available due to the base polymer to which the crosslinker reacts. Moreover, a further disadvantage here is that a high temperature of 120 °F (48.9 °C) to 500 °F (260 °C) is required for the curing process. Such high temperatures are costly and inefficient from a manufacturing point of view.

What is needed, therefore, are rubber polymers that can be crosslinked in the absence of sulfur and vulcanizing chemical accelerators in an economical manner. In addition, there is a need to improve the efficiency of the manufacturing process and the rate of crosslinking reaction.

### BRIEF SUMMARY OF THE INVENTION

One embodiment of the present invention provides a crosslinked rubber latex composition. The composition includes a polymer containing units having at least one of carboxyl and hydroxyl functional groups. Also included is a coreactant polyelectrolyte that is compounded with the polymer to form a compound. The coreactant polyelectrolyte has a relatively low molecular weight compared to the polymer, and contains units having at least one of carboxyl and hydroxyl functional groups. Also included is a polyfunctional crosslinking agent that is timely added to the compound. This crosslinking agent is capable of crosslinking with at least two of the carboxyl or hydroxyl functional groups, or at least one of the carboxyl functional groups and at least one of the hydroxyl functional groups at ambient temperature (e.g., 70 °F (21.1 °C) and 119 °F (48.3 °C)) or higher, thereby forming a crosslinked network in the rubber latex.

The crosslinked rubber latex composition can be in the form of, for example, rubber gloves, condoms, or other elastomeric rubber film products. The polymer can be in the form of a solution, latex, or dispersion. Likewise, the polymer and the coreactant polyelectrolyte can each be in liquid form. The crosslinking agent can be water soluble, and relatively low in molecular weight (e.g., less than 1000) compared to that of the polymer. In one particular embodiment, the composition further includes an acid or acid-forming catalyst agent used for enhancing the crosslinking between the polyfunctional crosslinking agent and functional groups.

The polyfunctional crosslinking agent may crosslink, for example, by purely ionic means through salt bridges formed between protonated nitrogen atoms of the crosslinking agent and anionic carboxyl and/or hyroxyl functionalities of the polymer. Alternatively, or in addition to, the polyfunctional crosslinking agent may crosslink with itself via ring opening and polymerization to form higher molecular weight polyamines which can also crosslink by ionic means. Alternatively, or in addition to, the polyfunctional crosslinking agent may covalently crosslink anionic carboxyl and/or hyroxyl functionalities of the polymer and the coreactant polyelectrolyte to form a three dimensional crosslinked network by bridging polymer and polyelectrolyte chains. Alternatively, or in addition to, the polyfunctional crosslinking agent may entangle and entrap the polymer and the coreactant polyelectrolyte as it polymerizes into higher molecular weight forms.

The polymer may include, for example, at least one of -OH, -SH, -NH, -NH₂, -COOH, -SO₂NH₂, -CONH₂, -Cl or -Br functional groups, while the coreactant polyelectrolyte may contain at least one of -OH, -SH, -NH, -NH₂, -COOH, -SO₂NH₂, -CONH₂, -Cl or -Br functional groups, such that 100 parts by weight of the polymer are present per 1 to 30 parts by weight of the coreactant polyelectrolyte. In such an embodiment, the polyfunctional crosslinking agent is capable of reacting with at least one of the -OH, -SH, -NH, -NH₂, -COOH, -SO₂NH₂, -CONH₂, -Cl or -Br functional groups present.

The coreactant polyelectrolyte may be compounded with the polymer, such that 100 parts by weight of the polymer are present per 1 to 30 parts by weight of the coreactant polyelectrolyte. The polyfunctional crosslinking agent can be added to the compound, such that 0.1 to 10 parts by weight of the polymer are present. In one specific embodiment, the polymer is a synthetic polymer, which contains 1% to 20% by weight of the functional groups, and has a molecular weight above 200,000. The coreactant polyelectrolyte can be a synthetic polymer, which contains 1% to 50% by weight of the functional groups, and has a molecular weight of 1,000 to 200,000. The polyfunctional crosslinking agent can be, for example, a polyfunctional aziridine.

The polymer can be, for example, in the form of an aqueous latex rubber comprising a synthetic rubber that has carboxyl and/or hydroxyl functional groups attached to a acrylonitrile butadiene polymer, a butadiene polymer, a chloroprene polymer, a polyurethane polymer, or a acrylonitrile butadiene polymer blend. The coreactant polyelectrolyte may comprise, for example, a carboxylated and/or hyroxylated styrene butadiene, butadiene, ethylene acrylic polyelectrolyte, or any other carboxylated and/or hydroxylated synthetic polyelectrolyte. The compound to which the polyfunctional crosslinking agent is added may further include one or more of the following: fillers, waxes, plasticizers, surfactants, soaps, antioxidants, and pigments. The polyfunctional crosslinking agent can be added to the compound, for example, 1 to 72 hours before use of the composition, and at a level of no more than about 10% by weight of the polymer to the compound. In one specific embodiment, the polyfunctional crosslinking agent is added 2 to 48 hours before use of the composition, and at a level of no more than about 0.1 to 5% by weight of the polymer to the compound.

Various features of the composition will be apparent in light of this disclosure. For example, the composition may exhibit a tensile stress retention property of from about 10% to 70%, where the stress retention property is defined as the percentage retention of initial stress force after a predefined time period at 100% extension. In one particular case, the predefined period is about 6 minutes.

Another embodiment of the present invention provides an method for dip-forming rubber products. The method includes compounding a solution, latex, or dispersion of rubber latex A that includes A1 and A2 with a crosslinking agent B to provide a rubber polymer latex dip-forming composition. A1 is a polymer containing units having at least one of carboxyl and hydroxyl functional groups, and A2 is a coreactant polyelectrolyte having a low molecular weight relative to the polymer and containing units having at least one of carboxyl and hydroxyl functional groups. B is a polyfunctional crosslinking agent capable of crosslinking with at least two of the carboxyl or hydroxyl functional groups, or at least one of the carboxyl functional groups and at least one of the hydroxyl functional groups at ambient temperature or higher. The method further includes dipping a dip former in the rubber polymer latex dip-forming composition, and withdrawing the dip former, thereby providing a dip-formed wet latex gel layer. The method continues with curing the dip-formed wet latex gel layer at ambient temperature or higher, so as to allow a crosslinking network to form, and to provide a dip-formed dry latex layer.

In one such embodiment, prior to dipping the dip former in the rubber polymer latex dip-forming composition, the method further includes coating a dip former with a chemical coagulant for latex. The chemical coagulant may contain, for example, an acid or acid-forming catalyst to enhance crosslinking. In another such an embodiment, prior to curing, the method further includes dipping the dip-formed wet latex gel layer in a water bath to remove water-soluble impurities. The water bath may contain, for example, an acid or acid-forming catalyst to enhance crosslinking. Note that the addition of a crosslinking catalyst here may be in addition to, or as an alternative to the crosslinking catalyst used in the coagulant.

In one particular embodiment, and prior to curing, the method further includes at least one of coating the dip-formed wet latex gel layer with a liquid polymer, or chlorinating the dip-formed wet latex gel layer in a chlorine bath, to reduce the film surface tack by chlorination. In such a case, the liquid polymer and/or the chlorine bath may contain an acid or acid-forming catalyst to enhance crosslinking. Curing the dip-formed wet latex gel layer can be carried out, for example, in a temperature range from 70 °F (21.1 °C) to 119 °F (48.3 °C). In one such embodiment, the curing time is about 30 minutes to one hour. Alternatively, curing the dip-formed wet latex gel layer can be carried out, for example, at temperatures greater than 119 °F (48.3 °C) to provide a faster curing time relative to ambient temperature curing, such as from about 220 °F (104.4 °C) to 260 °F (126.7 °C). Other curing temperature ranges can be used here as well. Note that curing the dip-formed wet latex gel layer may include evaporating excess water from the dip-formed wet latex gel layer. The evaporation can be accomplished, for example, using hot air convection and/or other heating techniques to expedite the evaporation process.

Note that the dip former can be adapted to form any one of a number of products. In one particular embodiment, the dip former is adapted to form at least one of condoms or protective gloves for medical, non-medical, scientific, and industrial uses. As previously stated, the rubber latex A may further include at least one of fillers, waxes, plasticizers, surfactants, soaps, antioxidants, and pigments. In another particular embodiment, compounding the rubber latex A with the crosslinking agent B includes adding the crosslinking agent B to the rubber latex A between 2 to 48 hours before use at a level of between about 0.1 to 5% by weight of the polymer to component A.

After curing the dip-formed wet latex gel layer, the method may further include post-leaching the dip-formed dry latex layer in a water bath to remove water-soluble impurities. Here, the water bath may contain at least one of an acid or acid-forming catalyst to enhance latent crosslinking, and a chlorine solution to reduce the surface tack on the rubber film. After post-leaching, the method may further include evaporating excess water from the dip-formed dry latex layer.

Another embodiment of the present invention provides crosslinked rubber latex product, wherein the product includes a polymer, a coreactant polyelectrolyte, and a polyfunctional crosslinking agent that can be configured as previously explained in reference to the crosslinked rubber latex composition embodiment. The product can have at least one of the following characteristics: a tensile stress modulus at 500% extension of not greater than 10 MPa, a tensile strength of greater than 14 MPa, and a tensile stress retention of less than 70% where the stress retention property is defined as the percentage retention of initial stress force after a 6 minute time period at 100% extension. The crosslinked rubber latex product can be, for example, a condom or a glove. The crosslinked rubber latex product can be accelerator free.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter.

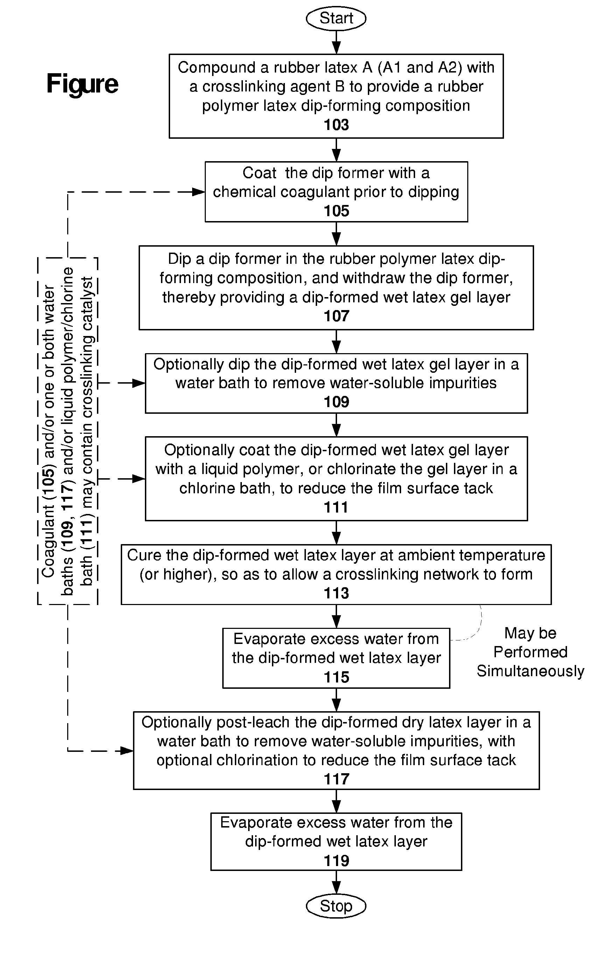

### BRIEF DESCRIPTION OF THE DRAWING

The Figure is a flow diagram illustrating a method for dip-forming rubber products in accordance with one embodiment of the present invention.

### DETAILED DESCRIPTION OF THE INVENTION

Embodiments of the present invention provide a composition and techniques for making accelerator free crosslinked rubber products. The crosslinking and curing process can be optionally performed at ambient temperatures (e.g., 70 °F (21.1 °C) to 119 °F (48.3 °C)) in an economical manner relative to conventional vulcanization techniques. Note, however, that increased temperature (e.g., 220 °F (104.4 °C) to 260 °F (126.7 °C)) can be used to further optimize the crosslinking and curing process if so desired. The disclosed techniques are both cost effective and environmentally friendly. In addition, the crosslinked polymers maintain the physical performance properties of tensile strength, elongation, modulus, stress relaxation, and durability while eliminating the undesirable characteristics common to sulfur and vulcanizing accelerator-cured polymer materials like skin sensitization and allergic contact dermatitis, and surface contamination of manufactured products sensitive to chemical accelerators.

### General Overview

In accordance with an embodiment of the present invention, a crosslinked rubber latex may be formed by mixing a two part composition including components A and B. Component A comprises A1 and A2. A1 is a solution, latex, or dispersion which includes a high molecular weight polymer containing units having carboxyl and/or hydroxyl groups, and A2 is a relatively low molecular weight polyelectrolyte derived from a coreactant polymer having carboxyl and/or hydroxyl groups. Component B comprises a polyfunctional crosslinking agent (e.g., aziridine) capable of crosslinking with at least two carboxyl or hydroxyl groups, or at least one carboxyl group and at least one hydroxyl group at ambient temperature or higher. In one particular embodiment, both components A and B are in liquid form. The addition of an acid or acid-forming catalyst agent may be used to enhance the crosslinking reaction, even at ambient temperature.

The polyfunctional crosslinking agent B may react with the functional groups of polymer A1 and polyelectrolyte A2 in several ways. For example, it may crosslink by purely ionic means through salt bridges formed between protonated nitrogen atoms of the crosslinker and the anionic carboxyl and/or hyroxyl functionalities of the polymer. Alternatively, or in addition to, it may react with itself via ring opening and polymerization to form higher molecular weight polyamines which can also crosslink by ionic means. Alternatively, or in addition to, it may covalently crosslink anionic functionalities such as carboxyl and/or hyroxyl groups on the polymers to form a three dimensional crosslinked network by bridging polymer and polyelectrolyte chains. Alternatively, or in addition to, it may entangle and entrap the polymers as it polymerizes into higher molecular weight forms.

In more detail, the crosslinking agent B may polymerize into higher molecular weight polymers, form covalent cross links between polymer A1 and polyelectrolyte A2, and entrap or entangle polymers A1, A2, and B. For example, -COOH and/or -OH groups in the polymer composition and -COOH and/or -OH groups from coreactant polyelectrolytes in the latex can react with B to form strong covalent bonds and entrap or entangle the above polymer, polyelectrolyte, and polymerizable crosslinking agent to provide the strength, stretch, and durability of the final crosslinked polymer film. These desirable performance attributes may be achieved by employing a crosslinking agent which is water soluble, relatively low in molecular weight, and polyfunctional having at least two reactive groups resulting in the ability to use no or only minimal amounts of heat to cure and crosslink adjacent functional groups bridging the polymer and polyelectrolyte chains and forming entangled networks in rubber films.

One particular embodiment of the present invention enables the reinforcement via crosslinking across polymer and polyelectrolyte chains, at ambient temperature or higher, a low modulus rubber film (tensile stress less than 10 MPa at 500% elongation), while preserving the tensile strength at break (greater than 14 MPa) . Such an embodiment provides a composition material formed from a carboxylated and/or hydroxylated polymer, a coreactant carboxylated and/or hydroxylated polyelectrolyte, and a crosslinking agent in an amount sufficient to confer bonding and crosslinking and the desired physical characteristics of the rubber film.

Ambient temperature as described herein, generally refers to a temperature lower than 120 °F, and more particularly to a temperature in the range of 70 °F (21.1 °C) to 119 °F (48.3 °C). In one particular application, ambient temperature is that between about 80 °F (26.6 °C) and 110 °F (43.3 °C). However, the present invention is not deemed excessively heat-dependent relative to conventional vulcanization techniques, and is not intended to be limited to a particular temperature range. Also, note that other factors, such as moisture content will affect the optimal crosslinking/curing temperature. An ambient temperature of about 80 °F and 110 °F provides an efficient curing environment that is sustainable without excessive heat injection.

Curing times of about 30 minutes to one hour are sufficient at an ambient temperature range of 80 °F (26.6 °C) and 110 °F (43.3 °C). Note that higher curing temperatures generally provide faster curing times. For example, a curing temperature range of 220 °F (104.4 °C) to 260 °F (126.7 °C), would provide curing times of about 15 to 30 minutes. Thus, if conservation of energy is more important than manufacturing speed, then an ambient temperature could be employed. On the other hand, greater manufacturing speeds can be achieved by employing higher curing temperatures at the cost of higher energy consumption. Such tradeoffs can be assessed for any given application.

In any such case, the combination of components A and B in accordance with the principles of the present invention provide crosslinking polymer compositions having improved elasticity, durability, and water and solvent resistance compared to conventional products. One particular application for the disclosed compositions is for rubber gloves (such as medical gloves used in examination and surgery), non-medical rubber gloves, scientific rubber gloves, and industrial rubber gloves. However, the present invention is also applicable to other areas as will be apparent in light of this disclosure, such as the condom industry. In a more general sense, the present invention may be beneficially employed in any industry requiring the use of crosslinked elastomeric rubber films.

### Two-Component Composition : A + B

A two-component composition is now described that includes a rubber latex polymer mixture containing components A (which includes sub-components A1 and A2), and a component B. The resulting latex composition vulcanizable rubber mixture is free of sulfur and chemical accelerators, such as thiocarbamates, thiruams, carbothiazoles, guanidines, and sulfonimides. Component A comprises a high molecular weight rubber A1 and a relatively low molecular weight coreactant polyelectrolyte A2. Component B is a crosslinking agent.

In one embodiment, the high molecular weight rubber polymer A1 contains at least one of -OH, -SH, -NH, -NH₂, -COOH, -SO₂NH₂, -CONH₂, -Cl or -Br functional groups, while the relatively low molecular weight coreactant polyelectrolyte A2 contains at least one of -OH, -SH, -NH, -NH₂, -COOH, -SO₂NH₂, -CONH₂, -Cl or -Br functional groups, such that 100 parts by weight of polymer A1 are present per 1 to 30 parts by weight of polyelectrolyte A2. In addition, the crosslinking agent B is capable of reacting with at least one of the -OH, -SH, -NH, -NH₂, -COOH, -SO₂NH₂, -CONH₂, -Cl or -Br functional groups present in such an amount that from 0.1 to 10 parts by weight of A1 are present.

In one particular embodiment, the high molecular weight rubber polymers A1 are synthetic polymers, which contain 1% to 20% by weight of the reactive functional groups, and have a molecular weight above 200,000 and preferably above 250,000. In addition, the low molecular weight coreactant polyelectrolyte polymers A2 can be synthetic polymers, which contain 1% to 50% by weight of the reactive functional groups, and have a molecular weight of 1,000 to 200,000, preferably between 5,000 and 150,000. The crosslinking agent can be, for example, a polyfunctional aziridine, and have a molecular weight of less than 1,000, and preferably 500 or less.

Thus a composition configured in accordance with this particular embodiment of the present invention is obtained by crosslinking a polymer A1 containing carboxyl and/or hyroxyl groups and a coreactant polyelectrolyte A2 derived from a polymer also containing carboxyl groups and/or hydroxyl groups, with a polyfunctional aziridine crosslinker B that is capable of crosslinking with carboxyl and/or hyroxyl groups at ambient temperature (or higher if so desired). This crosslinking forms crosslinked networks in rubber products, and therefore can be used to form durable elastomeric rubber films, especially for making rubber gloves and condoms.

### Component A : A1

In some embodiments, sub-component A1 is in the form of an aqueous latex rubber. The latex rubber may be selected from a carboxylated nitrile, butadiene, or chloroprene rubber or any suitable carboxylated and/or hydroxylated elastomeric rubber latex material. The appropriate choice of the elastomer will depend upon the desired characteristics of the composition, such as the desired strength, elongation, modulus, stress relaxation, and durability. Example synthetic rubbers that may have carboxyl and/or hydroxyl functional groups attached include but are not limited to: polybutadiene, butadiene-acrylic acid polymers, polychloroprene, polyisoprene, polyurethane, styrene-butadiene polymers, isobutylene-isoprene polymers, butadiene-acrylonitrile polymers, partially hydrogenated or fully hydrogenated butadiene-acrylonitrile polymers, and ethylene-propylene-diene polymers. Preferably these polymers are carboxylated and/or contain hydroxyl functional groups.

In one particular such embodiment, the carboxylated nitrile rubber used is a terpolymer that may contain diene monomers such as butadiene and isoprene, chloroprene monomers, isoprene monomers, nitrile monomers such as acrylonitrile, methacrylonitrile and propionitrile and alpha, beta-unsaturated carboxylic acid monomers. Examples of alpha, beta-unsaturated carboxylic acid monomers are monocarboxylic acids (e.g., acrylic acid, methacrylic acid, crotonic acid and cinnamic acid), dicarboxylic acids (e.g., maleic acid, fumaric acid, itaconic acid and citraconic acid), and dicarboxylic acid monoesters (e.g., monomethyl maleate, monoethyl maleate, monobutyl maleate, monomethyl itaconate, monoethyl itaconate and monobutyl itaconate). The acrylonitrile content of the nitrile rubber is not limited in particular, but 5% to 60% by weight can be used. The nitrile rubber has a high molecular weight above 200,000. The carboxyl content of the nitrile is 1% to 20% by weight, and preferably between 3% and 10%.

### Component A : A2

As previously explained, the coreactant polyelectrolyte sub-component A2 is capable of being crosslinked in accordance with the principles of the present invention. In one embodiment, the polyelectrolyte A2 comprises, in the salt form, sufficient carboxyl and/or hydroxyl groups to crosslink and includes, for example, acrylic acid-acrylate polyelectrolytes, acrylic acid-acrylamide polyelectrolytes, acrylic acid-olefin polyelectrolytes, polyacrylic acid, acrylic acid-vinyl aromatic polyelectrolytes, acrylic acid-styrene sulfonic acid polyelectrolytes, acrylic acid-vinyl ether polyelectrolytes, acrylic acid vinyl acetate polyelectrolytes, acrylic acid-vinyl alcohol polyelectrolytes, polyelectrolytes of methacrylic acid with all of the above co-monomers, polyelectrolytes of maleic acid, fumaric acid and their esters with all of the above co-monomers, and polyelectrolytes of maleic anhydride with all of the above co-monomers.

The preferred coreactants A2 include polyelectrolytes that contain polycarboxylic acids, polysulfonic acids, polyanhydrides, polythiols, polyalcohols and polyglycols. In one such embodiment, the coreactant polyelectrolyte A2 comprises a carboxylated or hydroxylated coreactant polymer. It is also preferred that any sub-component A2 be water soluble or capable of being emulsified, or dispersed with a solids content from about 20% to 80% and in the molecular weight range of about 1000 to 200,000. In addition, the coreactant A2 has a relatively low molecular weight of, for example, 5,000 to 150,000 containing from 1% to 50% functional groups. Further, in addition to the carboxyl and hydroxyl groups, the polyelectrolytes A2 may also contain other known functional groups, such as carboxylic acid esters, carboxylic acid amides or sulfonic acid groups.

Various weight ratios of sub-components polymer A1 and polyelectrolyte A2 may be employed, depending upon the desired characteristics of the composition. In one embodiment, the ratio of A1 to A2 ranges from about 100 to 1 to about 100 to 30, with a specific embodiment being where A1 includes approximately between 5 and 20 parts per hundred of A2.

The pH of the component mixture A and B is maintained, for example, at greater than 7.0, and in particular between 8 and 11. The control is accomplished by use of a combination of volatile amines and sodium or potassium hydroxide, or other suitable pH adjusting compound. Such amine examples include ammonia, dimethyl ethanolamine, and triethylamine.

### Component A : Optional Sub-components

In addition to A1 and A2 polymers, component A may optionally include filler materials A3. Such filler materials may be desirable for improving water and/or solvent resistance. Example fillers include silica, kaolin, talc or calcium carbonate, or other known fillers used in the rubber industry. For instance, highly dispersed silica's can be optionally present in the form of mixed oxides with other metals, such as Al, Mg, Ca, Ba, Zn, Zr, or Ti oxides; synthetic silicates, such as aluminum silicate, alkaline earth metal silicate, such as magnesium or calcium silicate; and natural silicates, such as kaolin and other naturally occurring silica.

In such an embodiment, one or more fillers can be provided in fine powder form or as a dispersion in water. The amount of any filler A3 employed may be varied in accordance with the desired end properties of the composition. They may also impart better water and/or solvent resistance and tear strength to the final rubber film. Suitably component A includes no more than about 50% by weight of filler. In one particular embodiment, the component A includes less than about 20% filler (e.g., between 2% and 15%).

Component A polymers may also include ancillary ingredients A4 to manipulate qualities such as appearance, processing, storage and handling, as desired. Such ingredients include: pigments, red iron oxide, phthalocyanine blue, polyviolet, polyred, pigment dispersing agents, surfactants, soaps, titanium dioxide, defoamers, antioxidants, and antimicrobial agents. Component A may also include other agents for modifying the properties of the crosslinked film product. For example, other optional ingredients A4 include thickening agents (e.g., cellulose or modified cellulose type polymers such as methyl cellulose or hydroxyl propyl methyl cellulose), and plasticizers (e.g., dibutyl phthalate or diisonyl phthalate) to improve flexibility, elongation, and modulus of the final polymer film.

### Component B

In one embodiment, and as previously stated, the polyfunctional crosslinking agent B is capable of crosslinking with a carboxyl and/or hyroxyl group of the polymer A1 and a carboxyl and/or hydroxyl group of the coreactant polyelectrolyte A2. In one such particular embodiment, the crosslinking agent B comprises a polyfunctional aziridine crosslinker with the formula: 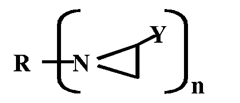 wherein n is a value of 2 or greater.

In an alternative embodiment, the aziridine crosslinker is trifunctional, where n=3, as represented by the following formula:

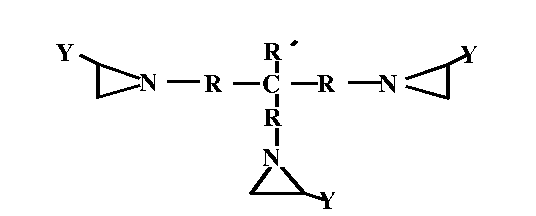

Here, Y is a hydrogen ion or lower alkyl group of about 1 to 4 carbon atoms. In one such embodiment, Y is a methyl group, and R and R' are a polymer chains. Commercially available examples of a polyfunctional aziridine crosslinker in which Y is methyl include, for instance, those under the trade name of XAMA (e.g., XAMA-220, XAMA-7), PFAZ (e.g., PFAZ-322) and CX-100 (e.g., trimethylolpropane-tris-(beta-(N-aziridine)) propionate, CAS number 64265-57-2). Other trifunctional aziridines include tris(N-aziridinyl)phosphine oxide and triethylenemelamine, which have the following respective formulas:

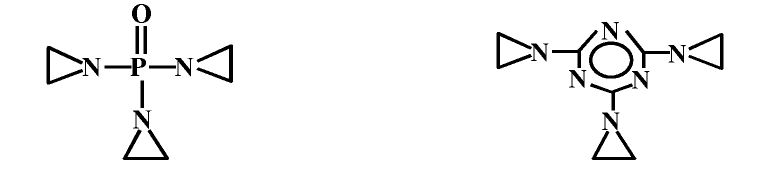

In one embodiment, the component B is added 1 to 72 hours before use at a level of no more than about 10% by weight of A1, preferably at the level of between about 0.1 to 5% by weight of A1. It is further preferable that the crosslinker be added 2 to 48 hours before use. Components A and B are selected to provide latex for making a crosslinked elastomer, which has a pot life of, for example, 48 hours to 72 hours. As previously stated, the crosslinking agent B can be trifunctional and water miscible, and have a molecular weight below 1,000. An aqueous solution, emulsion, or dispersion of the crosslinker B may be stabilized with the aid of solvents such as methyl glycol acetate and other glycol solvents.

Such a trifunctional aziridine crosslinker may crosslink sub-components A1 and A2 as follows. The reaction of crosslinking agent B with carboxyl groups in the A1 polymer:

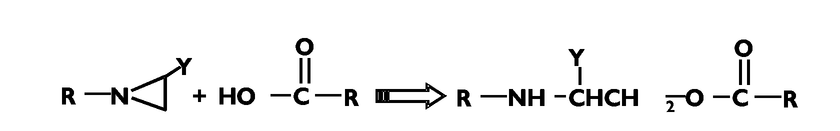

Reaction of crosslinking agent B with carboxyl groups in the polymer A1 and polyelectrolyte A2:

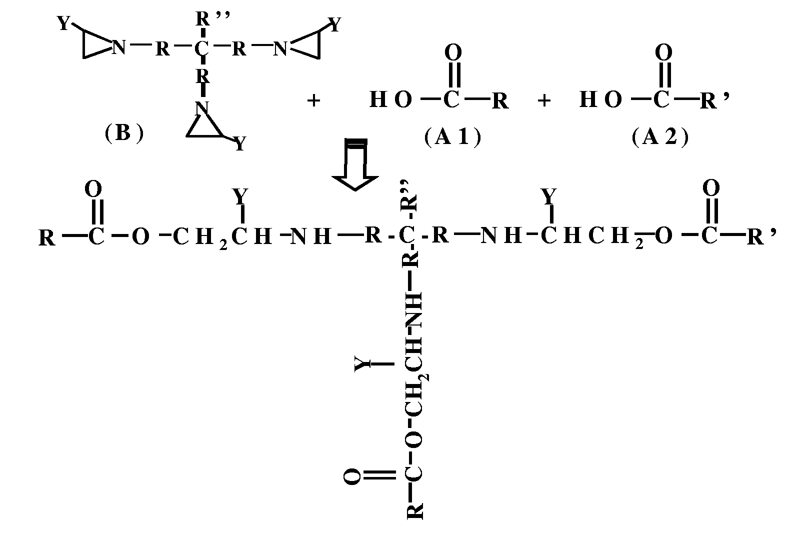

### Catalyst Enhanced Crosslinking

In addition to components A (including sub-components A1 to A4) and B, the rubber composition may optionally be treated with an acid or acid-forming catalyst type material. Any such acid or acid-forming material may be a catalyst for speeding up the crosslinking reaction and improving the crosslinking efficiency of the polymer network. Note that suitable aziridine cross linkers are capable of reacting with carboxyl and/or hyroxyl groups with no catalyst.

However, the addition of an acid or acid-forming catalyst agent enhances the crosslinking reaction, even at ambient temperature, thereby further reducing the time to fully complete the process. As such, the composition is capable of producing an elastomeric crosslinking effect, or of forming elastomeric rubber films for use in making thin filmed rubber products, such as medical and non-medical rubber gloves, scientific rubber gloves, and condoms, achievable at ambient temperatures or higher.

Examples of acid-forming catalysts may include phosphoric or perchloric acids, p-toluene sulfonic acid, various phosphoric acid esters, such as di-2-ethyhexyl acid phosphate, and the like. Other examples include mineral acids (e.g., hydrochloric, sulfuric or fluoboric acid), organic acids (e.g., acetic acid), hydrochlorides, sulfates, or nitrates of weak organic bases. Other examples include latent acid catalysts (e.g., nitrates, chlorides, sulfates, acetates and fluoborates of magnesium or zinc), alkali metal acid sulfates and phosphates, and other known acid catalysts. In one particular embodiment, the acid or acid-forming catalyst solution includes about 1% to about 80% concentration, and preferably between 1 and 50%.

Appropriate choice of components A (including A1 to A4) and B, and crosslinking catalyst operates to provide a crosslinked rubber film composition, which when employed at ambient temperature, is more energy efficient by not requiring the high curing temperatures typically used to make rubber products with conventional vulcanization compositions. The principles of the present invention enable a composition and method of making accelerator free crosslinked rubber products at a lower temperature that is both cost effective and environmentally safe. An example ambient temperature range is about 70 °F (21.1 °C) to 119 °F (48.3 °C), but other temperature ranges are acceptable, as will be apparent in light of this disclosure.

Undesired water or moisture in the rubber film may be removed using heating methods such as hot air convection (e.g., 70 °F (21.1 °C) to 119 °F (48.3 °C)). Such hot air convection can be supplemented with other heating methods like infrared, microwave, or high frequency radiation, or another type of energy to expedite the evaporation process.

Note that the present invention is not intended to be limited to aziridine crosslinking of carboxyl and hydroxyl functional groups in the polymers of component
A. Rather, the latex composition mixture may comprise a rubber sub-component A1 which contains at least one of -OH, -SH, -NH, - NH₂, -COOH, -SO₂NH₂, -CONH₂, -Cl or -Br functional groups; and a coreactant polyelectrolyte A2 which contains at least one of -OH, -SH, -NH, - NH₂, -COOH, -SO₂NH₂, -CONH₂, -Cl or -Br functional groups; and a polyfunctional crosslinking agent B which is capable of reacting with at least one of the -OH, -SH, -NH, - NH₂, -COOH, -SO₂NH₂, -CONH₂, -Cl or -Br functional groups present. Numerous polyfunctional crosslinking agents can be used here, as will be apparent in light of this disclosure.

As discussed above, component A (including A1 to A4) and B can be selected so as to be water miscible, emulsified, or dispersible in a latex compound. Thus, such an embodiment of the present invention also has advantages in providing a crosslinking network composition, which is free of conventional undesirable rubber accelerator chemicals such as dithiocarbamate, thiuram, guanidine, sulfenamide, benzothiazyl, and benzothiazole accelerators, and produces durable rubber films for use in a number of applications.

An example rubber latex formulation configured in accordance with one embodiment of the present invention is shown in the following table:

| **Component/Sub-Component** | **Parts per Hundred Weight** |
|---|---|
| A1: Rubber Polymer (e.g., Carboxylated Nitrile) | 100 p.h.w. |
| A2: Coreactant (e.g., Carboxylated polyelectrolyte) | 15 p.h.w. |
| A3: Filler (e.g., Silicates) | 3 p.h.w. |
| A4: Other components (e.g., wax, pigment, surfactant, soap, titanium dioxide, plasticizer) | 3 p.h.w. |
| B: Polyfunctional Crosslinking Agent (e.g., Aziridine) | 1 p.h.w. |

The example formulation contains two major components, one accommodating component A (polymer and coreactant) and the other accommodating component B (crosslinking agent). Component A is a compound of sub-components A1 to A4. In one particular embodiment, component B is in an amount of 0.1 to 5 p.h.w. added to the compounded latex (component A) within 2 to 48 hours before use. An acid or acid-forming catalyst agent can be used to treat the rubber film in a solution, for example, of 1 to 50 % concentration optionally added to the process of dipping rubber latex.

Note that all the proportions in this example formulation can be varied subject to the desired end application. The example formulation may be adjusted to achieve a desirable balance in the end properties such as ultimate elongation, tensile strength, modulus, stress relaxation, and durability.

### Methodology

The Figure is a flow diagram illustrating a method for dip-forming rubber products in accordance with one embodiment of the present invention. Such a method can be employed, for example, in the manufacturing of protective gloves used for medical, non-medical, scientific, and industrial uses. The method employs a two component (A and B) rubber polymer latex that can be cross-linked at ambient temperature or higher as previously described herein. The method yields high grade vulcanizates without the addition of sulfur and vulcanizing chemical accelerators.

The method begins with compounding 103 a solution, latex, or dispersion of rubber latex A (A1 and A2) with a crosslinking agent B to provide a rubber polymer latex dip-forming composition, wherein A1 is a polymer containing units having carboxyl and/or hyroxyl groups and A2 is a relatively low molecular weight coreactant polyelectrolyte having carboxyl and/or hydroxyl groups and B is a polyfunctional crosslinking agent capable of crosslinking with at least two carboxyl or hyroxyl groups, or at least one carboxyl group and at least one hydroxyl group at ambient temperature or higher. In alternative embodiments, component A may further include A3 and or A4, where A3 is filler materials and A4 is ancillary ingredients for manipulating qualities such as appearance, processing, storage and handling.

The previous discussion as to particulars of the components A and B, as well as the compounding parameters (e.g., timing of when B is added to A, and % by weight of B to A), are equally applicable here. For example, in one particular embodiment, compounding 103 includes adding the component B to the component A from 1 to 72 hours before use at a level of no more than about 10% by weight of A1, preferably at the level of between about 0.1 to 5% by weight of A1. It is further preferable that the component B be added 2 to 48 hours before use.

The method continues with coating 105 a dip former with a chemical coagulant for latex, and then dipping 107 the dip former in the rubber polymer latex dip-forming composition, and withdrawing the dip former, thereby providing a dip-formed wet latex gel layer. In one particular embodiment, the coagulant coating 105 can be accomplished, for example, by dipping the dip former in a liquid containing a coagulant for latex (e.g., calcium nitrate solution) and an acid or acid-forming catalyst to enhance crosslinking, and then withdrawing and drying the dip former.

The method may further include dipping 109 the dip-formed wet latex gel layer in a water bath to remove water-soluble impurities. The water bath may optionally contain a known acid or acid-forming catalyst to enhance crosslinking, and then withdrawing and drying the dip former. This optional addition of a crosslinking catalyst can be in addition to the catalyst in the coagulant of coating 105, or as an alternative to the catalyst in the coagulant of coating 105. The method may further include at least one of coating 111 the dip-formed wet latex layer with a liquid polymer, or chlorinating 111 the gel layer in a chlorine bath, to reduce the film surface tack (via chlorination). Other known techniques for reducing film surface tack can be used here as well. Note that the liquid polymer or chlorine bath may optionally contain a known acid or acid-forming catalyst to enhance crosslinking of the polymer chains.

The method continues with curing 113 the dip-formed wet latex gel layer at ambient temperature or higher, so as to allow a crosslinking network to form. As previously explained, an ambient curing temperature (e.g., from 70 °F (21.1 °C) to 119 °F (48.3 °C), and in one specific embodiment, from about 80 °F (26.6 °C) and 110 °F (43.3 °C)) would provide a curing time of about 30 minutes to an hour. A higher curing temperature (e.g., any temperature over 119 °F, and in one specific embodiment 220 °F (104.4 °C) to 260 °F (126.7 °C)) would provide a faster curing time of about 15 to 30 minutes. In any event, the cured rubber polymer latex dip-forming composition is robustly crosslinked, and provides high grade vulcanizates without the addition of sulfur and vulcanizing chemical accelerators.

Note that the dip-formed wet latex layer may contain a high water content, and may therefore need to be dried to remove the excess water and allow the crosslinking network to form. Thus, the method may further include evaporating 115 excess water from the dip-formed wet latex gel layer. This can be carried out, for example, by subjecting the dip-formed layer to hot air convection, infrared, microwave, or high frequency energy that can be adopted for drying. Note that this evaporating 115 can be carried out contemporaneously with the curing 113.

The method may further include post-leaching 117 the dip-formed dry latex layer in a water bath to remove water-soluble impurities. Note that the water bath may optionally contain a known acid or acid-forming catalyst to enhance latent crosslinking and/or a chlorine solution to reduce the surface tack on the rubber film. Again, this optional addition of a crosslinking catalyst can be in addition to the crosslinking catalyst in the coagulant of coating 105, and/or in the water of dipping 109, and/or in the polymer or chlorine bath of coating/chlorinating 111, or as an alternative to any of these. Thus, the optional crosslinking catalyst can be used at any one of 105, 109, 111, 117, or at any combination of these (e.g., 105; 109; 105 and 109; 105 and 111; 105 and 117; 109 and 111; 109 and 117; 111 and 117; etc).

The resulting dip-formed rubber layer may still contain a low water content and should therefore be dried further to remove the excess water and facilitate the formation of the crosslinking network. Accordingly, the method may further include evaporating 119 excess water from the dip-formed dry latex layer. Again, this additional evaporating step may be carried out by subjecting the dip-formed layer to hot air convection, infrared, microwave, or high frequency energy that can be adopted for drying as previously explained.

### Stress Relaxation

As previously explained, the present invention relates to a rubber composition and method that may be used to make products such as elastomeric medical, non-medical and scientific rubber gloves and condoms. These rubber products are typically made to be close fitting and it is especially important in some uses that they fit closely on the body. However, such a snug fit during use can lead to discomfort by the wearer due to the application of pressure of the rubber product on the body. This problem can be overcome by using nitrile butadiene rubber. In particular, this material is known to elicit stress relaxation properties when crosslinked by conventional sulfur vulcanization practices.

Specifically, when a carboxylated nitrile rubber material is stretched to 100% of its original length with an initial stress force and maintained at 100% elongation, it relaxes within a short, predefined time period (e.g., 6 minutes) while maintaining the 100% elongation. The practical application of this effect is that snug fitting gloves when donned initially, become less stressful within a short period of time thereby reducing the pressure applied to the wearer's hands. The end result is a glove material that provides greater comfort and sensitivity to the wearer. Note that the stress relaxation property may be applied to any polymer component A that is so desired, and the present invention is not intended to be limited to any one specific polymer or nitrile rubber materials.

The present invention provides a material that is free from the problems associated with conventional vulcanization practices (e.g., sulfur and vulcanization accelerators), but yet maintains the unique properties of stress relaxation. Accordingly, one embodiment of the present invention can be configured to provide an elastomeric rubber material composition that may be used to make rubber gloves and condoms, and which exhibits a stress retention property of about 10% to 70% where said stress retention is the percentage retention of the initial stress force after a short period of time (e.g., six minutes) at 100% extension.

The foregoing description of the embodiments of the invention has been presented for the purposes of illustration and description. It is not intended to be exhaustive or to limit the invention to the precise form disclosed. Many modifications and variations are possible in light of this disclosure. For example, the coreactant polyelectrolyte A2 may have a molecular weight that is the same or higher than that of polymer A1, where A2 has a higher density of functional groups (carboxyl and/or hydroxyl) than A1. It is intended that the scope of the invention be limited not by this detailed description, but rather by the claims appended hereto.

## Claims

1. A crosslinked rubber latex composition comprising:
a polymer containing units having at least one of carboxyl and hydroxyl functional groups;
a coreactant polyelectrolyte having a relatively low molecular weight compared to the polymer, and compounded with the polymer to form a compound, and containing units having at least one of carboxyl and hydroxyl functional groups; and
a polyfunctional crosslinking agent timely added to the compound, and capable of crosslinking with at least two of the carboxyl or hydroxyl functional groups, or at least one of the carboxyl functional groups and at least one of the hydroxyl functional groups at ambient temperature or higher, thereby forming a crosslinked network in the rubber latex.

2. A composition according to Claim 1, wherein the polymer is in the form of a solution, latex, or dispersion.

3. A composition according to Claim 1 or 2, wherein the polymer and the coreactant polyelectrolyte are each in liquid form.

4. A composition according to Claim 1, 2 or 3, wherein the crosslinking agent is water soluble and relatively low in molecular weight as compared to the polymer.

5. A composition according to any preceding claim, further comprising an acid or acid-forming catalyst agent used for enhancing the crosslinking between the polyfunctional crosslinking agent and functional groups.

6. A composition according to any preceding claim, wherein the polyfunctional crosslinking agent crosslinks by purely ionic means through salt bridges formed between protonated nitrogen atoms of the crosslinking agent and anionic carboxyl and/or hydroxyl functionalities of the polymer.

7. A composition according to Claim 1, wherein the polyfunctional crosslinking agent crosslinks with itself via ring opening and polymerization to form higher molecular weight polyamines which can also crosslink by ionic means.

8. A composition according to Claim 1, wherein the polyfunctional crosslinking agent covalently crosslinks anionic carboxyl and/or hydroxyl functionalities of the polymer and the coreactant polyelectrolyte to form a three dimensional crosslinked network in the rubber by bridging polymer and polyelectrolyte chains.

9. A composition according to Claim 1, wherein the polyfunctional crosslinking agent entangles and entraps the polymer and the coreactant polyelectrolyte as it polymerizes into higher molecular weight forms.

10. A composition according to any preceding claim, wherein the crosslinked rubber latex composition is in the form of rubber gloves or condoms.

11. A composition according to any preceding claim, wherein the polymer includes at least one of -OH, -SH, -NH, -NH₂, -COOH, -SO₂NH₂, -CONH₂, -Cl or -Br functional groups, while the coreactant polyelectrolyte contains at least one of -OH, -SH, -NH, -NH₂, -COOH, -SO₂NH₂, -CONH₂, -Cl or -Br functional groups, such that 100 parts by weight of the polymer are present per 1 to 30 parts by weight of the coreactant polyelectrolyte.

12. A composition according to Claim 11, wherein the polyfunctional crosslinking agent is capable of reacting with at least one of the -OH, -SH, -NH, -NH₂, -COOH, -SO2NH2, -CONH2, -Cl or -Br functional groups present.

13. A composition according to any preceding claim, wherein the coreactant polyelectrolyte is compounded with the polymer, such that 100 parts by weight of the polymer are present per 1 to 30 parts by weight of the coreactant polyelectrolyte.

14. A composition according to any preceding claim, wherein the polyfunctional crosslinking agent is added to the compound, such that 0.1 to 10 parts by weight of the polymer are present.

15. A composition according to any preceding claim, wherein the polymer is a synthetic polymer, which contains 1% to 20% by weight of the functional groups, and has a molecular weight above 200,000.

16. A composition according to any preceding claim, wherein the coreactant polyelectrolyte is a synthetic polymer, which contains 1% to 50% by weight of the functional groups, and has a molecular weight of 1,000 to 200,000.

17. A composition according to any preceding claim, wherein the polyfunctional crosslinking agent is a polyfunctional aziridine.

18. A composition according to any preceding claim, wherein the polymer is in the form of an aqueous latex rubber comprising a synthetic rubber that has carboxyl and/or hydroxyl functional groups attached to a acrylonitrile butadiene polymer, a butadiene polymer, a chloroprene polymer, a polyurethane polymer, or a acrylonitrile butadiene polymer blend.

19. A composition according to any preceding claim, wherein the coreactant polyelectrolyte comprises a carboxylated and/or hyroxylated styrene butadiene, butadiene, ethylene acrylic polyelectrolyte, or any other carboxylated and/or hydroxylated synthetic polyelectrolyte.

20. A composition according to any preceding claim, wherein the compound to which the polyfunctional crosslinking agent is added further comprises one or more fillers, waxes, plasticizers, surfactants, soaps, antioxidants, and pigments.

21. A composition according to any preceding claim, wherein the polyfunctional crosslinking agent is added to the compound 1 to 72 hours before use of the composition, and at a level of no more than about 10% by weight of the polymer to the compound.

22. A composition according to Claim 21, wherein the polyfunctional crosslinking agent is added 2 to 48 hours before use of the composition, and at a level of no more than about 0.1 to 5% by weight of the polymer to the compound.

23. A composition according to any preceding claim, wherein the composition exhibits a tensile stress retention property of from about 10% to 70%, where the stress retention property is defined as the percentage retention of initial stress force after a predefined time period at 100% extension.

24. A composition according to Claim 23, wherein the predefined period is about 6 minutes.

25. A composition according to any preceding claim, wherein the polyfunctional crosslinking agent is capable of crosslinking at a temperature between 70°F (21.1°C) and 119°F (48.3°C).

26. A method for dip-forming rubber products comprising:
compounding a solution, latex, or dispersion of rubber latex A that includes A1 and A2 with a crosslinking agent B to provide a rubber polymer latex dip-forming composition, wherein A1 is a polymer containing units having at least one of carboxyl and hydroxyl functional groups, and A2 is a coreactant polyelectrolyte having a low molecular weight relative to the polymer and containing units having at least one of carboxyl and hydroxyl functional groups, and B is a polyfunctional crosslinking agent capable of crosslinking with at least two of the carboxyl or hydroxyl functional groups, or at least one of the carboxyl functional groups and at least one of the hydroxyl functional groups at ambient temperature or higher;
dipping a dip former in the rubber polymer latex dip-forming composition, and withdrawing the dip former, thereby providing a dip-formed wet latex gel layer; and
curing the dip-formed wet latex gel layer at ambient temperature or higher, so as to allow a crosslinking network to form, and to provide a dip-formed dry latex layer.

27. A method according to Claim 26, wherein prior to dipping the dip former in the rubber polymer latex dip-forming composition, the method further comprises coating a dip former with a chemical coagulant for latex.

28. A method according to Claim 27, wherein the chemical coagulant contains an acid or acid-forming catalyst to enhance crosslinking.

29. A method according to any of Claims 26 to 28, wherein prior to curing, the method further comprises dipping the dip-formed wet latex gel layer in a water bath to remove water-soluble impurities, wherein the water bath contains an acid or acid-forming catalyst to enhance crosslinking.

30. A method according to any of Claims 26 to 28, wherein prior to curing, the method further comprises at least one of coating the dip-formed wet latex gel layer with a liquid polymer, or chlorinating the dip-formed wet latex gel layer in a chlorine bath, to reduce the film surface tack, wherein the liquid polymer and/or the chlorine bath contains an acid or acid-forming catalyst to enhance crosslinking.

31. A method according to any of Claims 26 to 30, wherein curing the dip-formed wet latex gel layer is carried out in a temperature range from 70°F (21.1°C) to 119°F (48.3°C).

32. A method according to any of Claims 26 to 31, wherein the curing time is about 30 minutes to an hour.

33. A method according to any of Claims 26 to 30, wherein curing the dip-formed wet latex gel layer is carried out in a temperature greater than 119°F (48.3°C)to provide a faster curing time relative to ambient temperature curing.

34. A method according to any of Claims 26 to 33, wherein the dip former is adapted to form at least one of condoms or protective gloves for medical, non-medical, scientific, and industrial uses.

35. A method according to any of Claims 26 to 34, wherein the rubber latex A further includes at least one of fillers, waxes, plasticizers, surfactants, soaps, antioxidants, and pigments.

36. A method according to any of Claims 26 to 35, wherein compounding the rubber latex A with the crosslinking agent B comprises adding the crosslinking agent B to the rubber latex A between 2 to 48 hours before use at a level of between about 0.1 to 5% by weight of component A1.

37. A method according to any of Claims 26 to 36, wherein curing the dip-formed wet latex gel layer further comprises evaporating excess water from the dip-formed wet latex gel layer.

38. A method according to any of Claims 26 to 37, wherein after curing the dip-formed wet latex gel layer, the method further comprises post-leaching the dip-formed dry latex layer in a water bath to remove water-soluble impurities, wherein the water bath contains at least one of an acid or acid-forming catalyst to enhance latent crosslinking, and a chlorine solution to reduce the surface tack on the rubber film.

39. A method according to Claim 38, further comprising evaporating excess water from the dip-formed dry latex layer.

40. A crosslinked rubber latex product formed from a composition according to any of Claims 1 to 25.

41. A crosslinked rubber latex product according to Claim 40, wherein the product has at least one of the following characteristics: a tensile stress modulus at 500% extension of not greater than 10 MPa, a tensile strength of greater than 14 MPa, and a tensile stress retention of less than 70% where the stress retention property is defined as the percentage retention of initial stress force after a 6 minute time period at 100% extension.

42. A crosslinked rubber latex product according to Claim 40 or 41, wherein the product is accelerator free.
